# EUROPEAN PATENT SPECIFICATION

(11) **EP 3 529 533 B1**
(45) Date of publication and mention of the grant of the patent: **30.12.2020**
(21) Application number: 17780747.6
(22) Date of filing: 09.10.2017
(51) Int. Cl.: F21V 14/04, F21S 6/00, F21S 8/06, F21V 17/02, F21S 4/28, F21Y 103/10, F21Y 115/10

(54) **A LAMP**
LAMPE
LAMPE

(30) Priority: 18.10.2016 GB 201617601
(43) Date of publication of application: 28.08.2019
(73) Proprietor: Marshall, John Reuben, Chertsey, Surrey KT16 8RH (GB)
(72) Inventor: Marshall, John Reuben, Chertsey, Surrey KT16 8RH (GB)
(74) Representative: Bartholomew, Anna
(86) International application number: PCT/EP2017/075611
(87) International publication number: WO 2018/073032

(56) References cited:
- WO-A1-2016/162616
- DE-A1-102005 035 720
- DE-U1- 7 727 830
- US-A1- 2008 273 321

## Description

The invention relates to a lamp.

A traditional table lamp generally emits light at roughly equal intensity in all horizontal directions, and also emits light both upwardly and downwardly. A spot lamp will generally emit light in a conical beam centred on a single direction.

US 2008/273321 A1 discloses a light comprising at least one elongate light source and several individual elements which are located next to the light source and which can be swivelled or rotated independently of each other about an axis that extends substantially parallel to the longitudinal axis of the light source.

DE 10 2005 035720 A1 discloses a light having an elongated light source and parallel to the light source, a light-guiding element and an elongated reflector and/or light limiting means.

DE 77 27 830 U1 discloses a lighting device having one light source and a reflector.

WO 2016/162616 A1 discloses a lighting device comprising several LED filaments disposed inside an at least partially transparent external container.

According to a first aspect of the invention, there is provided a lamp comprising: an elongate support, a plurality of light directing members, and a light generating unit; the light directing members being supported by the elongate support at respective different positions along the length of the elongate support, each light directing member being rotatable at least partially around the elongate support to select a rotational position of the light directing member from a respective range of rotational positions of the light directing member; the light generating unit comprises a plurality of light sources, the light sources being supported by the elongate support at respective different positions along the length of the elongate support, and wherein each light directing member cooperates with a respective one of the light sources so that at any rotational position within said respective range of rotational positions of the light directing member, the light directing member receives light from the cooperating light source and directs the light away from the lamp in a direction dependent on the selected rotational position of the light directing member characterised in that each light directing member comprises a respective tube which defines a respective interior passage, the light from the light generating unit being directed along the interior passage of the light directing member away from the lamp and each light directing member is open at both ends of the respective tube, the light from the light generating unit being directed along the interior passage of the light directing member away from the lamp in two respective opposite directions.

By selecting respective rotational positions for the light directing members, the user can control the directions in which light is directed away from the lamp. In this way, the lamp can be used to produce an aesthetically pleasing lighting arrangement within a room. Alternatively, the lamp may be used to illuminate different features of a room positioned in different directions away from the lamp.

Preferably, the rotational position of each light directing member can be selected independently of the respective selected rotational positions of the other light directing members. This provides a high degree of control over the directions in which light is directed.

By pairing each light directing member with a respective light source, it is possible to provide a lamp which is highly efficient in the sense that a large proportion of the light generated is directed in desired directions.

Preferably, each light directing member has a respective aperture which receives the elongate support so as to allow the rotation of the light directing member around the elongate support. In this case, the aperture of each light directing member transects the interior passage of the tube of the light directing member.

Preferably the elongate support comprises a tube. The light sources are positioned within the tube at respective different positions along the length of the tube. The tube has a light transmitting wall such that light from each light source which is received by the cooperating light directing member passes through the light transmitting wall to be received by the light transmitting member.

In a particularly preferred embodiment of the invention, the elongate support comprises a tube having a light transmitting wall and the light sources are positioned within the tube of the elongate support at respective different positions along the length of the tube. Each light directing member also has a respective aperture which receives the tube of the elongate support so as to allow the rotation of the light directing member around the elongate support. The aperture of each light directing member transects the interior passage of the light directing member. The light directing members are arranged on the tube of the elongate support so that each light source lies within the aperture of a cooperating one of the light directing members. In this way, the light emitted from any particular light source passes through the light transmitting wall of the tube of the elongate support and then along the interior passage of the cooperating one of the light directing members to be directed away from the lamp.

In embodiments in which light sources are positioned within a tube of the elongate support, it may be desirable to provide a fan which propels air through the tube so as to cool the light sources.

Preferably, each light source may be an LED light source. Alternatively, each light source may be an incandescent light bulb.

In addition, the lamp may comprise a base for positioning on a flat surface such that when the base is positioned on a flat surface, the base supports the elongate support in a generally upstanding orientation.

Alternatively, the lamp may comprise an attachment by which the elongate support may be suspended.

In accordance with a second aspect of the invention, there is provided a kit for assembly to form a lamp, the kit comprising: an elongate support, a plurality of light directing members, and a light generating unit: the light directing members being supportable by the elongate support at respective different positions along the length of the elongate support so that, when so supported, each light directing member is rotatable at least partially around the elongate support to select a rotational position of the light directing member from a respective range of rotational positions of the light directing members; wherein the light generating unit comprises a plurality of light sources, when assembled the light sources being supported by the elongate support at respective different positions along the length of the elongate support, and when assembled, each light directing member cooperates with a respective one of the light sources so that at any rotational position within said respective range of rotational positions of the light directing member, the light directing member receives light from the cooperating light source and directs the light away from the lamp in a direction dependent on the selected rotational position of the light directing member characterised in that each light directing member comprises a respective tube which defines a respective interior passage, when assembled the light from the light generating unit is directed along the interior passage of the light directing member away from the lamp; and each light directing member is open at both ends of the respective tube, such that when assembled the light from the light generating unit is directed along the interior passage of the light directing member away from the lamp in two respective opposite directions.

All of the preferred embodiments of the first aspect of the invention described above are equally applicable to the second aspect of the invention.

The following is a more detailed description of embodiments of the inventions, by way of example, reference being made to the appended schematic drawings in which:
Figure 1 is a perspective view of a first embodiment of a lamp;
Figure 2 is a perspective view showing a base, an elongate support tube, and seven light sources of the lamp of Figure 1;
Figure 3 is a perspective view of one of seven light directing members of the lamp of Figure 1;
Figure 4 is an orthographic view of the lamp of Figure 1;
Figure 5 is a perspective view of a second embodiment of a lamp; and
Figure 6 is a cross-sectional view of the lamp of Figure 5.

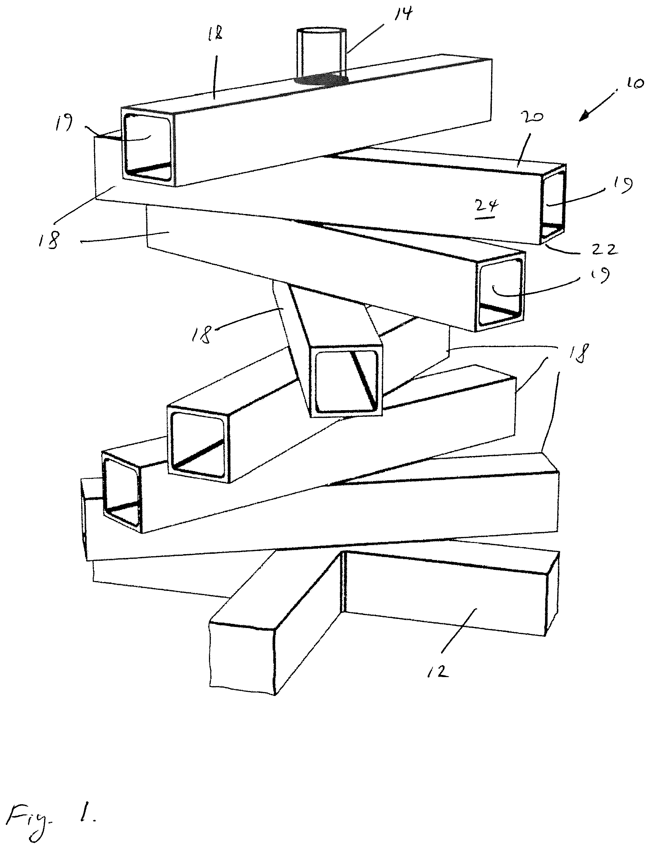

Referring first to Figures 1 to 3, the first lamp 10 comprises a base 12, an elongate support tube 14, a light generating unit including seven distinct light sources 16, and seven light directing members 18.

The elongate support tube 14 has a circular cross section and has a transparent wall. The elongate support tube 14 is fixed to the base 12 and the base 12 serves to hold the elongate support tube 14 in a vertical orientation. The base 12 may be positioned on any flat surface.

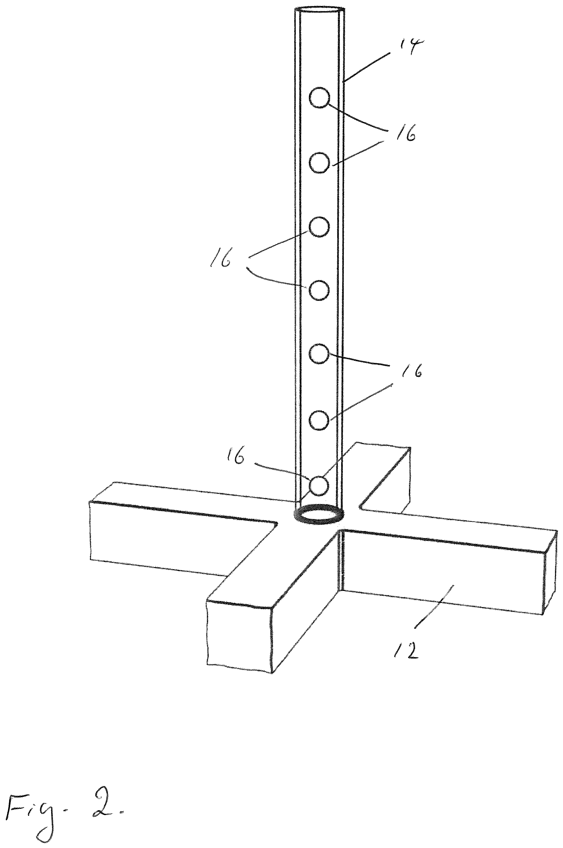

As best seen in Figure 2, the seven light sources 16 of the light generating unit are positioned within the elongate support tube 14. The light sources 16 are equally spaced from one another along the length of the elongate support tube 14 for a purpose to be described below. The light generating unit also includes suitable wiring (not shown) so as to provide power to the light sources 16 for illumination of the light sources 16. The light sources 16 are shown in the figures in a schematic manner. The light sources 16 may be, for example, LED light sources. Alternatively, the light sources 16 may be incandescent light bulbs.

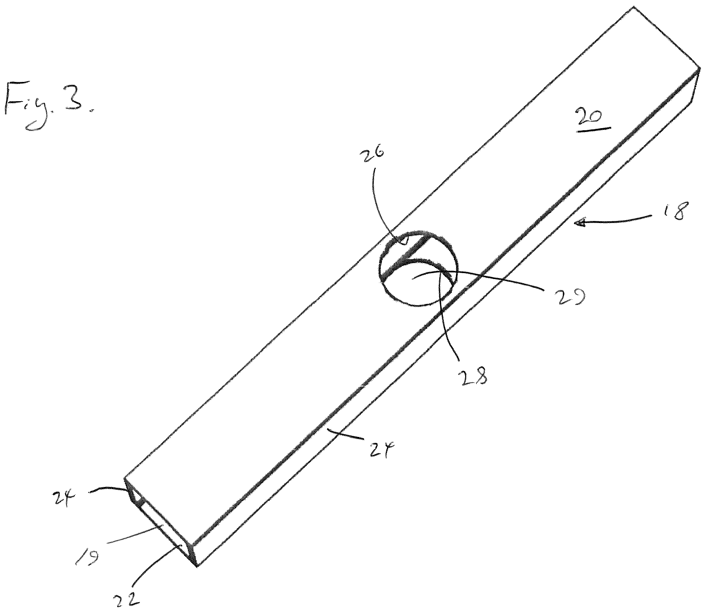

One of the light directing members 18 is shown in Figure 3. In this particular embodiment, the light directing members 18 are identical to one another and so only the light directing member shown in Figure 3 will be described.

The light directing member 18 shown in Figure 3 is generally a tube having a square cross-section and defining an interior passage 19. In this embodiment, the tube has two open ends. Hence, the light directing member 18 has an upper wall 20, a lower wall 22, and two side walls 24 which connect the upper wall 20 to the lower wall 22. The upper wall 20 is provided with a top hole 26 which passes across the upper wall 20 and the lower wall 22 is provided with a bottom hole 28 which passes across the lower wall 22. The top and bottom holes 26, 28 are circular, have the same diameter and share a common axis. Hence the light directing member 18 may be considered to have a cylindrical aperture 29 starting at the top hole 26 and passing through the interior passage 19 to terminate at the bottom hole 28. The aperture 29 transects the interior passage 19 of the light directing member 18. The diameter of the top and bottom holes 26, 28 is slightly greater than the outer diameter of the elongate support tube 14.

The light directing member may be an aluminium extrusion which has been machined to form the top and bottom holes 26, 28.

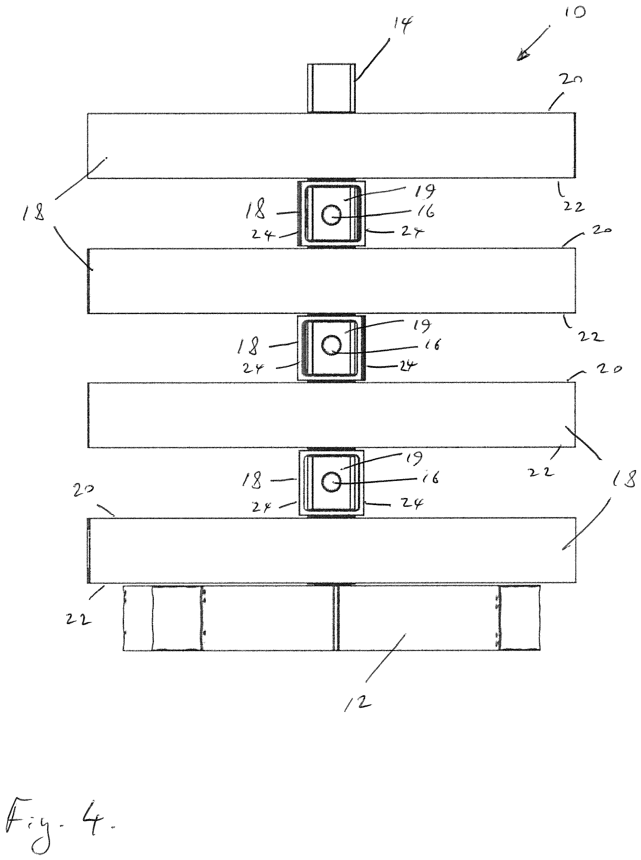

Referring now to Figures 1 and 4, the seven light directing members 18 are mounted on the elongate support tube 14 such that the elongate support tube 14 passes through the aperture 29 (including the top and bottom holes 26, 28) of each light directing member 18. Hence, as seen in Figures 1 and 4, the light directing members 18 are positioned one on top of another. Each light directing member 18, other than the light directing member 18 positioned at the bottom, has a lower wall 22 which rests against an upper wall 20 of the light directing member 18 positioned immediately below. The lower wall 22 of the light directing member 18 at the bottom rests against the base 12.

As the diameter of the top and bottom holes 26, 28 is slightly greater than the outer diameter of the elongate support tube 14, the light directing members 18 can be rotated freely around the elongate support tube 14. Hence, by comparing Figures 1 and 4, it will be noticed that the light directing members 18 have been positioned in different respective rotational positions.

Referring now to Figure 4, the height of each light directing member 18, and the spacing between the light sources 16, is such that each light source 16 lies approximately midway between the upper and lower walls 20, 22 of a corresponding one of the light directing members 18. In this way, each light source 16 cooperates with its own one of the light directing members 18 such that light from the light source 16 passes first through the transparent wall of the elongate support tube 14 and then through the interior passage 19 of the cooperating light directing member 18. As the light directing members 18 are open at both ends in this embodiment, each light directing member 18 directs light away from the lamp 10 in two respective opposite directions (i.e. each direction passing through a respective one of the two open ends). By rotating any one of the light directing members 18 around the elongate support tube 14, the two opposite directions in which light is directed away from the lamp 10 are changed dependent on the rotational position of the light directing member 18.

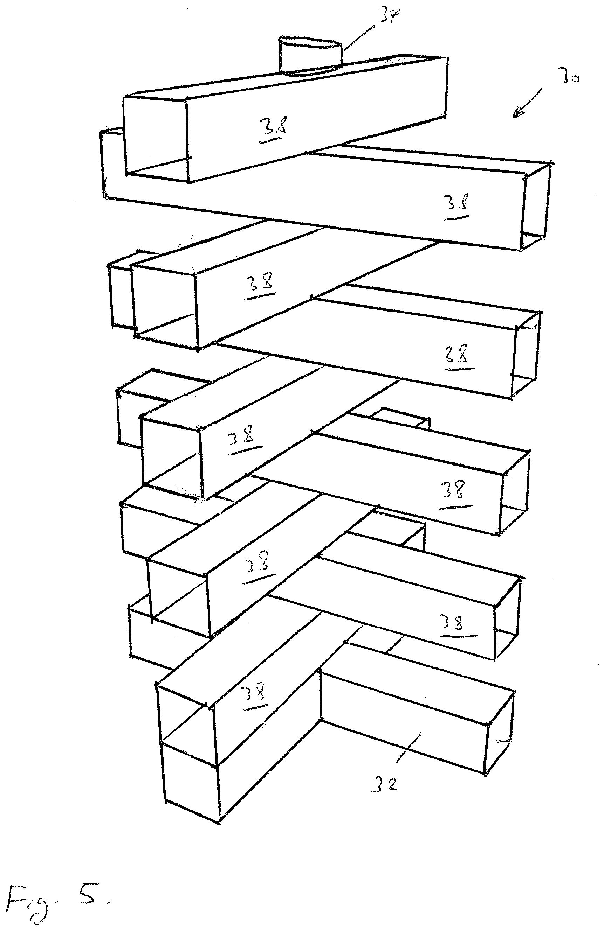

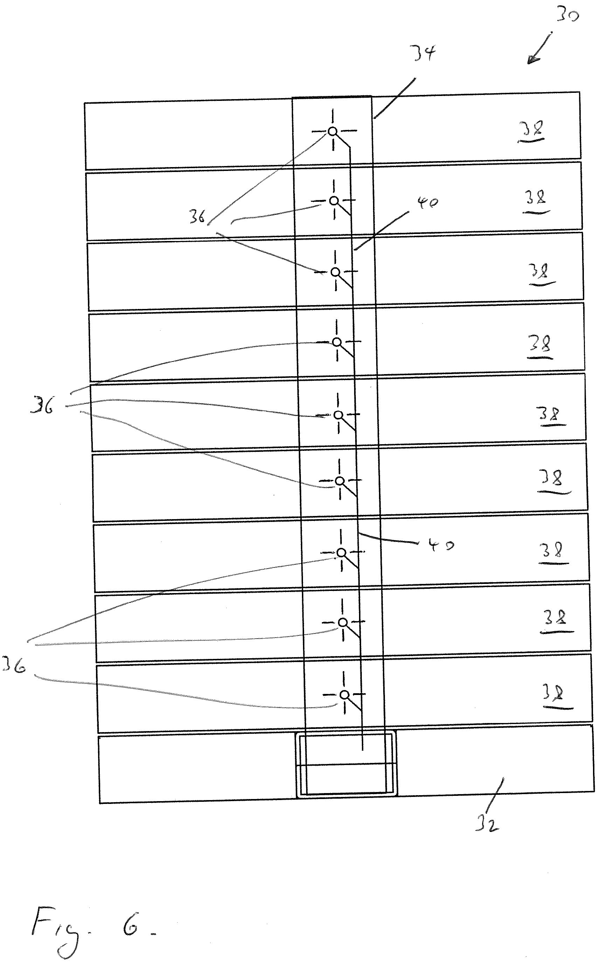

It will be appreciated that any plural number of light directing members 18 may be provided. The first lamp 10 shown in Figures 1 to 4 has seven light directing members 18. A second lamp 30 having nine light directing members is shown in Figures 5 and 6. The second lamp 30 has a base 32, an elongate support tube 34, nine separate light sources 36 and nine light directing members 38. The structure and operation of the second lamp 30 are very similar to those of the first lamp 10 and so the second lamp 30 will not be described in detail. It will be noticed, however, that wiring suitable for powering the light sources 36 is shown schematically in Figure 6 at number 40.

It will be appreciated that many modifications may be made to the lamp without departing from the scope of the invention as defined in the appended claims.

For example, the elongate support tube 14, 34 may have a cross-section other than circular. Any suitable cross-section, such as square, hexagonal or octagonal, for example, may be used. Indeed, the elongate support tube 14, 34 could be replaced by any suitable structure capable of supporting the light directing members. For example, the elongate support tube 14 of the first lamp 10 could be replaced by four rods lying parallel to one another and at the corners of a notional square. In this case, the light sources 16 would be positioned within the notional square defined by the four rods. The top and bottom holes 26, 28 of the light directing members 18 would have a diameter sufficient to accommodate the four rods and to allow rotation of the light directing members 18 around the elongate support formed by the four rods.

It is not necessary for the light directing members 18, 38 to have a square cross-section. The light directing members 18, 38 could be tubes having any suitable cross-sections such as, for example, a circular cross-section. Whereas the light directing members in either lamp 10, 30 described above are identical to one another, this need not be the case and a lamp may have light directing members of different design.

In the first and second lamps 10, 30 described above, the light directing members 18, 38 are tubes having two opposed open ends. However, this need not be the case. Each light directing member 18, 38 could be a tube having one closed end and one open end. In this way, light would be directed out of the open end. It is not necessary for the light directing members 18, 38 to be tubes. Any suitable structure which serves to direct light in a defined direction and which can be rotated around an elongate support may be used.

The base 12, 32 need not be a cruciform type base as shown in the Figures. Any suitable base may be used. For example, the base may be a disc. It is not necessary to use a base at all. In some circumstances, it is desirable not to use a base and to provide the elongate support with an attachment which allows the elongate support to be suspended, for example from the ceiling of a room. In this case, the elongate support may be provided with some sort of stop at the bottom end so as to prevent the light directing members from falling off the lower end of the elongate support.

In the first and second lamps 10, 30 described above, the light generating unit comprises a plurality of distinct light sources 16, 36. Whereas this is the preferred arrangement, this need not be the case. The light generating unit may be, for example, some form of elongate light unit which emits light generally uniformly along its length. By way of a more specific example, the light generating unit may be a fluorescent tube or filament containing tube of a suitable size to fit within the elongate support.

In the first and second lamps 10, 30 described above, the light directing members 18, 38 lie one on top of another contacting one another. However, this need not be the case. Washers, or some other spacing means, may be provided between adjacent light directing members 18, 38 to space the light directing members 18, 38 from one another.

In the first and second lamps 10, 30 described above, the elongate support tubes 14, 34 have a straight orientation. However, elongate supports which have a curved orientation may also be used. In this case, it is necessary to ensure that the curvature does not prevent relative rotation of the light directing members. In one such arrangement, the light directing members may be spaced from one another by suitable spacers. In this manner, the light directing members can be rotated relative to one another without colliding with one another, even though the elongate support has a curved orientation.

The lamp may be provided in kit form. In this case, the base, elongate support, light directing members and light generating unit may be provided in disassembled form.

## Claims

1. A lamp comprising: an elongate support (14, 34), a plurality of light directing members (18, 38), and a light generating unit;
the light directing members (18, 38) being supported by the elongate support (14, 34) at respective different positions along the length of the elongate support (14, 34), each light directing member (18, 38) being rotatable at least partially around the elongate support (14, 34) to select a rotational position of the light directing member (18, 38) from a respective range of rotational positions of the light directing member (18, 38);
the light generating unit comprises a plurality of light sources (16, 36), the light sources being supported by the elongate support (14, 34) at respective different positions along the length of the elongate support (14, 34), and wherein each light directing member (18, 38) cooperates with a respective one of the light sources so that at any rotational position within said respective range of rotational positions of the light directing member (18, 38) the light directing member (18, 38) receives light from the cooperating light source and directs the light away from the lamp in a direction dependent on the selected rotational position of the light directing member (18, 38);
**characterised in that** each light directing member (18, 38) comprises a respective tube which defines a respective interior passage, the light from the light generating unit being directed along the interior passage of the light directing member (18, 38) away from the lamp; and
each light directing member (18, 38) is open at both ends of the respective tube, the light from the light generating unit being directed along the interior passage of the light directing member (18, 38) away from the lamp in two respective opposite directions.

2. A lamp according to claim 1, wherein the rotational position of each light directing member (18, 38) can be selected independently of the respective selected rotational positions of the other light directing members (18, 38).

3. A lamp according to claim 1, wherein each light directing member (18, 38) has a respective aperture which receives the elongate support (14, 34) for said rotation of the light directing member (18, 38) around the elongate support (14, 34), and wherein the aperture of each light directing member (18, 38) transects the interior passage of the light directing member (18, 38).

4. A lamp according to claim 3, wherein the tube of each light directing member (18, 38) comprises four side walls arranged such that the tube has a rectangular cross-section defined by the four side walls, the aperture passing through two opposite ones of the side walls, one of said opposite ones of the side walls of each light directing member (18, 38) lying generally parallel to a side wall of an adjacent light directing member (18, 38).

5. A lamp according to any preceding claim, wherein the elongate support (14, 34) comprises a tube, wherein the light sources are positioned within the tube of the elongate support (14, 34) at respective different positions along the length of the tube, and wherein the tube has a light transmitting wall such that light from each light source which is received by the cooperating light directing member (18, 38) passes through the light transmitting wall to be received by the light transmitting member.

6. A lamp according to claim 1, wherein the elongate support (14, 34) comprises a tube having a light transmitting wall, and wherein the light sources are positioned within the tube of the elongate support (14, 34) at respective different positions along the length of the tube, , each light directing member (18, 38) having a respective aperture which receives the tube of the elongate support (14, 34) for said rotation of the light directing member (18, 38) around the elongate support (14, 34), the aperture of each light directing member (18, 38) transecting the interior passage of the light directing member (18, 38), and wherein each light source lies within the aperture of the cooperating one of the light directing members (18, 38) so that the light from the light source passes through the light transmitting wall of the tube of the elongate support (14, 34) and then along the interior passage of the cooperating one of the light directing members (18, 38) away from the lamp.

7. A lamp according to claim 5 or claim 6, wherein the tube of the elongate support (14, 34) is circular in cross-section.

8. A lamp according to any one of claims 5 to 7, wherein the lamp is provided with a fan which propels air through the tube of the elongate support (14, 34) so as to cool the light sources within the tube of the elongate support (14, 34).

9. A lamp according any preceding claim, wherein each light source is selected from the group consisting of: an LED light source or an incandescent light bulb.

10. A lamp according to any one of claims 1 to 6, wherein the tube of each light directing member (18, 38) is formed from aluminium.

11. A lamp according to any one of claims 1 to 10, further comprising a base for positioning on a flat surface, the base supporting the elongate support (14, 34) in a generally upstanding orientation.

12. A lamp according to any one of claims 1 to 10, further comprising an attachment by which the elongate support (14, 34) may be suspended.

13. A kit for assembly to form a lamp, the kit comprising:
an elongate support (14, 34), a plurality of light directing members (18, 38), and a light generating unit;
the light directing members (18, 38) being supportable by the elongate support (14, 34) at respective different positions along the length of the elongate support (14, 34) such that, when so supported, each light directing member (18, 38) is rotatable at least partially around the elongate support (14, 34) to select a rotational position of the light directing member (18, 38) from a respective range of rotational positions of the light directing member (18, 38);
the light generating unit comprises a plurality of light sources (16, 36), when assembled the light sources being supported by the elongate support (14, 34) at respective different positions along the length of the elongate support (14, 34), and wherein when assembled each light directing member (18, 38) cooperates with a respective one of the light sources so that at any rotational position within said respective range of rotational positions of the light directing member (18, 38) the light directing member (18, 38) receives light from the cooperating light source and directs the light away from the lamp in a direction dependent on the selected rotational position of the light directing member (18, 38)
**characterised in that** each light directing member (18, 38) comprises a respective tube which defines a respective interior passage, when assembled the light from the light generating unit is directed along the interior passage of the light directing member (18, 38) away from the lamp; and
each light directing member (18, 38) is open at both ends of the respective tube, such that when assembled the light from the light generating unit is directed along the interior passage of the light directing member (18, 38) away from the lamp in two respective opposite directions.

## Patentansprüche

1. Lampe, die Folgendes umfasst: eine längliche Stütze (14, 34), mehrere Lichtleitelemente (18, 38) und eine Lichterzeugungseinheit;
wobei die Lichtleitelemente (18, 38) durch die längliche Stütze (14, 34) an entsprechenden unterschiedlichen Positionen entlang der Länge der länglichen Stütze (14, 34) gestützt werden, wobei jedes Lichtleitelement (18, 38) zumindest teilweise um die längliche Stütze (14, 34) drehbar ist, um eine Drehposition des Lichtleitelements (18, 38) aus einem entsprechenden Bereich von Drehpositionen des Lichtleitelements (18, 38) auszuwählen;
wobei die Lichterzeugungseinheit mehrere Lichtquellen (16, 36) umfasst, wobei die Lichtquellen durch die längliche Stütze (14, 34) an entsprechenden unterschiedlichen Positionen entlang der Länge der länglichen Stütze (14, 34) gestützt werden, und wobei jedes Lichtleitelement (18, 38) mit einer entsprechenden der Lichtquellen kooperiert, sodass bei einer beliebigen Drehposition innerhalb des entsprechenden Bereichs von Drehpositionen des Lichtleitelements (18, 38) das Lichtleitelement (18, 38) Licht von der kooperierenden Lichtquelle empfängt und das Licht weg von der Lampe in eine Richtung leitet, die von der ausgewählten Drehposition des Lichtleitelements (18, 38) abhängt;
**dadurch gekennzeichnet, dass** jedes Lichtleitelement (18, 38) eine entsprechende Röhre umfasst, die einen entsprechenden inneren Durchgang definiert, wobei das Licht von der Lichterzeugungseinheit entlang des inneren Durchgangs des Lichtleitelements (18, 38) von der Lampe weg geleitet wird; und
wobei jedes Lichtleitelement (18, 38) an beiden Enden der entsprechenden Röhre offen ist, wobei das Licht von der Lichterzeugungseinheit entlang des inneren Durchgangs des Lichtleitelements (18, 38) weg von der Lampe in zwei entsprechende entgegengesetzte Richtungen geleitet wird.

2. Lampe nach Anspruch 1, wobei die Drehposition jedes Lichtleitelements (18, 38) unabhängig von den jeweiligen ausgewählten Drehpositionen der anderen Lichtleitelemente (18, 38) ausgewählt werden kann.

3. Lampe nach Anspruch 1, wobei jedes Lichtleitelement (18, 38) eine entsprechende Öffnung hat, die die längliche Stütze (14, 34) für die Drehung des Lichtleitelements (18, 38) um die längliche Stütze (14, 34) aufnimmt, und wobei die Öffnung jedes Lichtleitelements (18, 38) den inneren Durchgang des Lichtleitelements (18, 38) schneidet.

4. Lampe nach Anspruch 3, wobei die Röhre jedes Lichtleitelements (18, 38) vier Seitenwände umfasst, die so angeordnet sind, dass die Röhre einen rechteckigen Querschnitt hat, der durch die vier Seitenwände definiert ist, wobei die Öffnung zwei einander gegenüberliegende Seitenwände jedes Lichtleitelements (18, 38) passiert, die im Allgemeinen parallel zu einer Seitenwand eines angrenzenden Lichtleitelements (18, 38) liegen.

5. Lampe nach einem der vorhergehenden Ansprüche, wobei die längliche Stütze (14, 34) eine Röhre umfasst, wobei die Lichtquellen innerhalb der Röhre der länglichen Stütze (14, 34) bei entsprechenden unterschiedlichen Positionen entlang der Länge der Röhre positioniert sind, und wobei die Röhre eine lichtübertragende Wand aufweist, sodass Licht von jeder Lichtquelle, das durch das kooperierende Lichtleitelement (18, 38) aufgenommen wird, die lichtübertragende Wand passiert, um durch das lichtübertragende Element aufgenommen zu werden.

6. Lampe nach Anspruch 1, wobei die längliche Stütze (14, 34) eine Röhre umfasst, die eine lichtübertragende Wand aufweist, und wobei die Lichtquellen innerhalb der Röhre der länglichen Stütze (14, 34) an entsprechenden unterschiedlichen Positionen entlang der Länge der Röhre positioniert sind, wobei jedes Lichtleitelement (18, 38) eine entsprechende Öffnung aufweist, die die Röhre der länglichen Stütze (14, 34) für die Drehung des Lichtleitelements (18, 38) um die längliche Stütze (14, 34) aufnimmt, wobei die Öffnung jedes Lichtleitelements (18, 38) den inneren Durchgang des Lichtleitelements (18, 38) schneidet, und wobei jede Lichtquelle innerhalb der Öffnung des kooperierenden der Lichtleitelemente (18, 38) liegt, sodass das Licht von der Lichtquelle die lichtübertragende Wand der Röhre der länglichen Stütze (14, 34) passiert und dann entlang des inneren Durchgangs des kooperierenden der Lichtleitelement (18, 38) weg von der Lampe läuft.

7. Lampe nach Anspruch 5 oder Anspruch 6, wobei die Röhre der länglichen Stütze (14, 34) im Querschnitt kreisförmig ist.

8. Lampe nach einem der Ansprüche 5 bis 7, wobei die Lampe mit einem Gebläse versehen ist, das Luft durch die Röhre der länglichen Stütze (14, 34) treibt, um die Lichtquellen im Inneren der Röhre der länglichen Stütze (14, 34) zu kühlen.

9. Lampe nach einem der vorhergehenden Ansprüche, wobei jede Lichtquelle aus der Gruppe ausgewählt wird, die besteht aus: einer LED-Lichtquelle oder einer hell leuchtenden Glühbirne.

10. Lampe nach einem der Ansprüche 1 bis 6, wobei die Röhre jedes Lichtleitelements (18, 38) aus Aluminium gebildet ist.

11. Lampe nach einem der Ansprüche 1 bis 10, ferner umfassend eine Basis zum Positionieren auf einer flachen Oberfläche, wobei die Basis die längliche Stütze (14, 34) in einer im Allgemeinen aufrechten Ausrichtung stützt.

12. Lampe nach einem der Ansprüche 1 bis 10, ferner umfassend eine Befestigung, durch die die längliche Stütze (14, 34) aufgehängt werden kann.

13. Zusammenbausatz zum Bilden einer Lampe, wobei der Satz Folgendes umfasst:
eine längliche Stütze (14, 34), mehrere Lichtleitelemente (18, 38) und eine Lichterzeugungseinheit;
wobei die Lichtleitelemente (18, 38) durch die längliche Stütze (14, 34) an entsprechenden unterschiedlichen Positionen entlang der Länge der länglichen Stütze (14, 34) stützbar sind, sodass, wenn so gestützt, jedes Lichtleitelement (18, 38) zumindest teilweise um die längliche Stütze (14, 34) drehbar ist, um eine Drehposition des Lichtleitelements (18, 38) aus einem entsprechenden Bereich von Drehpositionen des Lichtleitelements (18, 38) auszuwählen;
wobei die Lichterzeugungseinheit mehrere Lichtquellen (16, 36) umfasst, wobei, wenn zusammengebaut, die Lichtquellen durch die längliche Stütze (14, 34) an entsprechenden unterschiedlichen Positionen entlang der Länge der länglichen Stütze (14, 34) gestützt werden, und
wobei, wenn zusammengebaut, jedes Lichtleitelement (18, 38) mit einer entsprechenden der Lichtquellen kooperiert, sodass bei einer beliebigen Drehposition innerhalb des entsprechenden Bereichs von Drehpositionen des Lichtleitelements (18, 38) das Lichtleitelement (18, 38) Licht von der kooperierenden Lichtquelle empfängt und das Licht weg von der Lampe in eine Richtung leitet, die von der ausgewählten Drehposition des Lichtleitelements (18, 38) abhängt.
**dadurch gekennzeichnet, dass** jedes Lichtleitelement (18, 38) eine entsprechende Röhre umfasst, die einen entsprechenden inneren Durchgang definiert, wobei, wenn zusammengebaut, das Licht von der Lichterzeugungseinheit entlang des inneren Durchgangs des Lichtleitelements (18, 38) von der Lampe weg geleitet wird; und
wobei jedes Lichtleitelement (18, 38) an beiden Enden der entsprechenden Röhre offen ist, sodass, wenn zusammengebaut, das Licht von der Lichterzeugungseinheit entlang des inneren Durchgangs des Lichtleitelements (18, 38) weg von der Lampe in zwei entsprechende entgegengesetzte Richtungen geleitet wird.

## Revendications

1. Lampe comprenant : un support allongé (14, 34), une pluralité d'éléments directeurs de lumière (18, 38), et une unité génératrice de lumière ;
les éléments directeurs de lumière (18, 38) étant soutenus par le support allongé (14, 34) au niveau de positions respectives différentes le long de la longueur du support allongé (14, 34), chaque élément directeur de lumière (18, 38) étant apte à tourner au moins partiellement autour du support allongé (14, 34) afin de sélectionner une position de rotation de l'élément directeur de lumière (18, 38) parmi une gamme respective de positions de rotation de l'élément directeur de lumière (18, 38) ;
l'unité génératrice de lumière comprend une pluralité de sources lumineuses (16, 36), les sources lumineuses étant soutenues par le support allongé (14, 34) au niveau de positions respectives différentes le long de la longueur du support allongé (14, 34), et dans laquelle chaque élément directeur de lumière (18, 38) coopère avec une source respective des sources lumineuses de sorte qu'à n'importe quelle position de rotation au sein de ladite gamme respective de positions de rotation de l'élément directeur de lumière (18, 38) l'élément directeur de lumière (18, 38) reçoive de la lumière à partir de la source lumineuse coopérante et dirige la lumière pour l'éloigner de la lampe dans un sens qui est dépendant de la position de rotation sélectionnée de l'élément directeur de lumière (18, 38) ;
**caractérisée en ce que** chaque élément directeur de lumière (18, 38) comprend un tube respectif qui définit un passage intérieur respectif, la lumière provenant de l'unité génératrice de lumière étant dirigée le long du passage intérieur de l'élément directeur de lumière (18, 38) pour l'éloigner de la lampe ; et
chaque élément directeur de lumière (18, 38) est ouvert aux deux extrémités du tube respectif, la lumière provenant de l'unité génératrice de lumière étant dirigée le long du passage intérieur de l'élément directeur de lumière (18, 38) pour l'éloigner de la lampe dans deux sens opposés respectifs.

2. Lampe selon la revendication 1, dans laquelle la position de rotation de chaque élément directeur de lumière (18, 38) peut être sélectionnée indépendamment des positions de rotation sélectionnées respectives des autres éléments directeurs de lumière (18, 38).

3. Lampe selon la revendication 1, dans laquelle chaque élément directeur de lumière (18, 38) a une ouverture respective qui reçoit le support allongé (14, 34) pour ladite rotation de l'élément directeur de lumière (18, 38) autour du support allongé (14, 34), et dans laquelle l'ouverture de chaque élément directeur de lumière (18, 38) entrecoupe le passage intérieur de l'élément directeur de lumière (18, 38).

4. Lampe selon la revendication 3, dans laquelle le tube de chaque élément directeur de lumière (18, 38) comprend quatre parois latérales agencées de telle sorte que le tube présente une coupe transversale rectangulaire définie par les quatre parois latérales, l'ouverture passant à travers deux parois opposées des parois latérales, l'une desdites parois opposées des parois latérales de chaque élément directeur de lumière (18, 38) se situant en parallèle de manière générale à une paroi latérale d'un élément directeur de lumière adjacent (18, 38).

5. Lampe selon n'importe quelle revendication précédente, dans laquelle le support allongé (14, 34) comprend un tube, dans laquelle les sources lumineuses sont positionnées au sein du tube du support allongé (14, 34) au niveau de positions respectives différentes le long de la longueur du tube, et dans laquelle le tube possède une paroi à transmission de lumière de telle sorte que la lumière provenant de chaque source lumineuse qui est reçue par l'élément directeur de lumière coopérant (18, 38) passe à travers la paroi à transmission de lumière afin d'être reçue par l'élément de transmission de lumière.

6. Lampe selon la revendication 1, dans laquelle le support allongé (14, 34) comprend un tube possédant une paroi à transmission de lumière, et dans laquelle les sources lumineuses sont positionnées au sein du tube du support allongé (14, 34) au niveau de positions respectives différentes le long de la longueur du tube, , chaque élément directeur de lumière (18, 38) ayant une ouverture respective qui reçoit le tube du support allongé (14, 34) pour ladite rotation de l'élément directeur de lumière (18, 38) autour du support allongé (14, 34), l'ouverture de chaque élément directeur de lumière (18, 38) entrecoupant le passage intérieur de l'élément directeur de lumière (18, 38), et dans laquelle chaque source lumineuse se trouve au sein de l'ouverture de l'élément coopérant des éléments directeurs de lumière (18, 38) de sorte que la lumière provenant de la source lumineuse passe à travers la paroi à transmission de lumière du tube du support allongé (14, 34) et ensuite le long du passage intérieur de l'élément coopérant des éléments directeurs de lumière (18, 38) pour l'éloigner de la lampe.

7. Lampe selon la revendication 5 ou la revendication 6, dans laquelle le tube du support allongé (14, 34) est circulaire en coupe transversale.

8. Lampe selon n'importe lesquelles des revendications 5 à 7, la lampe étant dotée d'un ventilateur qui propulse de l'air à travers le tube du support allongé (14, 34) de sorte à refroidir les sources lumineuses au sein du tube du support allongé (14, 34).

9. Lampe selon n'importe quelle revendication précédente, dans laquelle chaque source lumineuse est sélectionnée parmi le groupe consistant en : une source lumineuse à DEL ou une ampoule d'éclairage à incandescence.

10. Lampe selon n'importe lesquelles des revendications 1 à 6, dans laquelle le tube de chaque élément directeur de lumière (18, 38) est formé en aluminium.

11. Lampe selon n'importe lesquelles des revendications 1 à 10, comprenant en outre une base pour un positionnement sur une surface plate, la base soutenant le support allongé (14, 34) suivant une orientation verticale de manière générale.

12. Lampe selon n'importe lesquelles des revendications 1 à 10, comprenant en outre un dispositif d'attache grâce auquel le support allongé (14, 34) peut être suspendu.

13. Kit pour assemblage pour former une lampe, le kit comprenant :
un support allongé (14, 34), une pluralité d'éléments directeurs de lumière (18, 38), et une unité génératrice de lumière ;
les éléments directeurs de lumière (18, 38) étant aptes à être soutenus par le support allongé (14, 34) au niveau de positions respectives différentes le long de la longueur du support allongé (14, 34), de telle sorte que, lorsqu'ils sont ainsi soutenus, chaque élément directeur de lumière (18, 38) soit apte à tourner au moins partiellement autour du support allongé (14, 34) afin de sélectionner une position de rotation de l'élément directeur de lumière (18, 38) parmi une gamme respective de positions de rotation de l'élément directeur de lumière (18, 38) ;
l'unité génératrice de lumière comprend une pluralité de sources lumineuses (16, 36), après assemblage les sources lumineuses étant soutenues par le support allongé (14, 34) au niveau de positions respectives différentes le long de la longueur du support allongé (14, 34), et après assemblage chaque élément directeur de lumière (18, 38) coopérant avec une source respective des sources lumineuses de sorte qu'à n'importe quelle position de rotation au sein de ladite gamme respective de positions de rotation de l'élément directeur de lumière (18, 38) l'élément directeur de lumière (18, 38) reçoive de la lumière à partir de la source lumineuse coopérante et dirige la lumière pour l'éloigner de la lampe dans un sens qui est dépendant de la position de rotation sélectionnée de l'élément directeur de lumière (18, 38)
**caractérisé en ce que** chaque élément directeur de lumière (18, 38) comprend un tube respectif qui définit un passage intérieur respectif, après assemblage la lumière provenant de l'unité génératrice de lumière étant dirigée le long du passage intérieur de l'élément directeur de lumière (18, 38) pour l'éloigner de la lampe ; et
chaque élément directeur de lumière (18, 38) est ouvert aux deux extrémités du tube respectif, de telle sorte qu'après assemblage la lumière provenant de l'unité génératrice de lumière soit dirigée le long du passage intérieur de l'élément directeur de lumière (18, 38) pour l'éloigner de la lampe dans deux sens opposés respectifs.
